(19) Europäisches Patentamt / European Patent Office / Office européen des brevets

(11) **EP 3 693 539 A1**

(12) **EUROPEAN PATENT APPLICATION**
published in accordance with Art. 153(4) EPC

(43) Date of publication:
**12.08.2020 Bulletin 2020/33**

(21) Application number: **18864963.6**

(22) Date of filing: **05.10.2018**

(51) Int Cl.:
***E21B 43/22*** *(2006.01)*  ***C09K 8/42*** *(2006.01)*
***B82Y 30/00*** *(2011.01)*

(86) International application number:
**PCT/RU2018/050121**

(87) International publication number:
**WO 2019/070166 (11.04.2019 Gazette 2019/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.10.2017 RU 2017135375**

(71) Applicant: **Limited Liability Company "GR Petroleum"**
**Moscow 121205 (RU)**

(72) Inventor: **SERGEEV, Vitalii Vyacheslavovich**
**Moscow 127474 (RU)**

(74) Representative: **Balder IP Law, S.L.**
**Paseo de la Castellana 93**
**5a planta**
**28046 Madrid (ES)**

(54) **METHOD FOR KILLING OIL AND GAS WELLS**

(57) The invention relates to the oil producing industry, and more particularly to techniques for killing oil and gas wells. The technical result of the invention is an increase in the effectiveness of geological and engineering operations for killing oil and gas wells having highly permeable hydraulic fractures. A method according to a first variant is used when well injectivity is less than 350 m³/day, and includes successively pumping a blocking agent and a displacement fluid into the bottom hole zone of a formation, wherein the blocking agent is an emulsion-suspension system containing diesel fuel or processed oil from a central processing facility, an emulsifier, a colloidal solution of hydrophobic nanoparticles of silicon dioxide, plugging particles in the form of hydrophilic nanoparticles of silicon dioxide, and also an aqueous solution of calcium chloride or potassium chloride. The colloidal solution of hydrophobic nanoparticles of silicon dioxide consists of silicon dioxide, propylene glycol monomethyl ether, and water. The displacement fluid is an aqueous solution of calcium chloride or potassium chloride, containing a water-repellent agent. A method according to a second variant is used when well injectivity is greater than 350 m³/day. In this case, the plugging particles used are hydrophilic microparticles of ilmenite or trimanganese tetraoxide. 2 independent claims. 10 figures.

**EP 3 693 539 A1**

**Description**

The invention relates to the oil producing industry, and more particularly to techniques for killing oil and gas wells.

The current state of oil and gas production zones in major oil and gas producing countries is characterized by depletion of oil and gas reserves. This fact necessitates a widespread application of various methods of physical and chemical action on oil and gas formations in order to intensify oil production. One of the most widely used physical methods of intensifying oil production is a hydraulic fracturing of a formation. The hydraulic fracturing is aimed at creating in a formation a network of highly permeable fractures that ensure the flow of oil and gas from less permeable and poorly drained zones of the formation.

At the same time, the hydraulic fracturing has some drawbacks, for example, uncontrolled growth of a hydraulic fracture results in a situation when under a high fracturing pressure fractures break into underlying or overlying water-bearing formations thus leading to hydrodynamic communication of the well with water-bearing formations.

Specialists in the art face additional difficulties when killing wells, in which a hydraulic fracturing has been performed, since presence in a bottom hole zone (hereinafter - BHZ) of an artificially created network of highly permeable fractures fixed by a proppant leads to absorption of huge volumes of water-based killing fluids, which adversely affects effective rock permeability and reduces effectiveness of geological and engineering operations for killing, development and bringing the well on stable production.

The prior art discloses a method of killing oil and gas wells (RF patent for invention No. 2047745, IPC E21B 43/12, C09K 7/06, published on 10.11.1995), including the sequential injection of a buffer fluid, a blocking fluid and a killing fluid into a bottom hole zone. In this case a surfactant or a water-hydrocarbon emulsion containing a surfactant is used as the buffer fluid. A hydrophobic emulsion solution containing oil, saline solution, emulsifier, stabilizer is used as the blocking fluid. Mineralized water or saline solution is used as the killing fluid. The disadvantage of this method is an absence of plugging particles in the process fluids. In this regard, the application of the method will be inefficient in reservoirs with highly permeable hydraulic fractures.

Russian patent for invention No. 2483092 (IPC C09K 8/42, published on 27.05.2013) discloses a method of preparing a composition of a polysaccharide well-killing gel containing fresh or mineralized water, a polysaccharide thickener, a crosslinker - chromium acetate with magnesium oxide, calcium chloride. The disadvantage of this method is the use of the polysaccharide gel insoluble in formation conditions, leading to uncontrolled colmatage of BHZ, and absence of plugging particles in the process fluids used to reduce porosity and permeability of reservoirs with highly permeable fractures.

RF patent for invention No. 2616632 (IPC E21B 43/12, C09K 8/48, C09K 8/493, published 18.04.2017) discloses a method of killing wells after hydraulic fracturing, including sequential injection of a saline solution based on chloride potassium, viscoelastic composition (saline solution based on potassium chloride, caustic soda and thickening polymer with filler) and saline solution into a bottom hole zone. The disadvantage of this method is a use of a polymer thickener containing xanthan gum and vermiculite to create a viscoelastic composition. The use of polymer thickeners with vermiculite content leads to an uncontrolled decrease in permeability of receiving intervals and non-fulfillment of one of the main conditions for well-killing - a temporary decrease in porosity and permeability of the BHZ. Also an injection of an aqueous solution of potassium chloride into a formation at the first stage of realization of the method and displacement of the solution into the bottom of the BHZ at the second and third stages adversely affects effective rock permeability of a formation.

Russian patent for invention No. 2279462 (IPC C09K 8/42, published on 10.07.2006), discloses a method of preparing a fluid for killing oil and gas wells, containing a polymer emulsion, an emulsifier - a surfactant, an aqueous solution of a mineral salt - in particular, calcium chloride or potassium chloride, highly dispersed hydrophobic material - in particular, silicon dioxide, oxides of titanium, iron; in one of the embodiments, hydrocarbon is additionally used. The disadvantage of this method is the use of polymers for thickening killing fluid. The use of aqueous solutions of polymers leads to the uncontrolled decrease in permeability of receiving intervals and the non-fulfillment of one of the main conditions for well-killing - a temporary decrease in porosity and permeability of the BHZ.

Russian patent for invention No. 2184839 (IPC E21B 43/12, published on 10.07.2002) discloses a well killing method, comprising injection of an invert emulsion-suspension system into the bottom hole zone, the system contains a mineralized aqueous dispersed phase, a hydrocarbon dispersing phase - in particular, oil or petroleum refinery products, emulsifier, stabilizer - hydrophobic silica modified with dimethyldichlorosilane vapour. The disadvantage of this method is that the addition of chemically modified silica does not change the phase permeability of the surface of the pore channels, but only increases the stability of the emulsion-suspension system. As well as an absence in the invert emulsion-suspension system of plugging particles that are used to reduce porosity and permeability of reservoirs with highly permeable fractures.

Patent CA 2765192 (IPC C09K 8/36, C09K 8/467, E21B 7/00, published 23.12.2010) discloses a method for preparing an invert emulsion for killing wells. The emulsion contains hydrocarbons, aqueous solution, emulsifier, degradable particles and plugging particles. The disadvantage of this method is technologically unjustified volumetric content in the invert emulsion of an aqueous phase in the range from 1 to 70% vol. The content of the aqueous phase in the specified interval will not provide an emulsion viscosity sufficient to block high-permeable BHZ intervals. Also, the use of fibrous materials in combination with large particles with an average diameter of from 1 to 1500 microns is ineffective in reservoirs with medium and low porosity and permeability, because the diameter of large particles will not provide for sufficient penetration of the emulsion into the bottom of the BHZ to prevent crossflows in a well-formation system.

To solve the above problems of oil and gas field development, a method is provided for killing oil and gas wells having highly permeable hydraulic fractures based on the sequential injection of an emulsion-suspension system and an aqueous solution of calcium chloride or potassium chloride containing a water repellent agent into a BHZ.

The essence of the invention is a method according to the first embodiment used when well injectivity is less than 350 m$^3$/day, comprising sequential injection of a blocking agent and displacement fluid into a bottom hole zone, wherein an emulsion-suspension system containing (% vol): diesel fuel or processed oil from a processing facility - 10-30, an emulsifier - 2-3, a colloidal solution of hydrophobic nanoparticles of silicon dioxide with a particle size of from 5 to 100 nm - 0.5-1, containing (% vol) silicon dioxide - 31-32.5, propylene glycol monomethyl ether - 67-69, water - the rest, hydrophilic nanoparticles of silicon dioxide - 1-3, an aqueous solution of calcium chloride or potassium chloride - the rest, is used as the blocking agent; a composition containing (% vol): ethers of higher unsaturated fatty acids and resin acids - 40-42, an amine oxide - 0.7-1, a high-molecular organic heat stabilizer - 0.5-1, a diesel fuel - the rest, is used as the emulsifier; a composition containing (% vol): silicon dioxide - 30-31 in isopropanol - 67-69 and methyl alcohol - the rest, or silicon dioxide - 29-31 in ethylene glycol - the rest, or dry amorphous silicon dioxide with a size particles from 5 to 500 nm, is used as hydrophilic silica nanoparticles; an aqueous solution of calcium chloride or potassium chloride containing a water repellent agent IVV-1 ($\textit{И}$BB-1) or ChAS-M ($\textit{Ч}$AC-M) brand with 2% vol. content, is used as a displacement fluid.

A method according to the second embodiment, used when well injectivity is greater than 350 m$^3$/day, comprises sequential injection of a blocking agent and displacement fluid into a bottom hole zone, wherein an emulsion-suspension system containing (% vol): diesel fuel or processed oil from a processing facility - 10-30, an emulsifier - 2-3, a colloidal solution of hydrophobic nanoparticles of silicon dioxide with a particle size of from 5 to 100 nm - 0.5-1, containing (% vol): silicon dioxide - 31-32.5, propylene glycol monomethyl ether - 67-69, water - the rest, hydrophilic microparticles of ilmenite or trimarganese tetroxide with a particle size of from 0.2 to 5 μm - 2-5, an aqueous solution of calcium chloride or potassium chloride - the rest, is used as the blocking agent; a composition containing (% vol): ethers of higher unsaturated fatty acids and resin acids - 40-42, an amine oxide - 0.7-1, a high-molecular organic heat stabilizer - 0.5-1, diesel fuel - the rest, is used as the emulsifier; an aqueous solution of calcium chloride or potassium chloride containing a water repellent agent of IVV-1 ($\textit{И}$BB-1) or ChAS-M ($\textit{Ч}$AC-M) brand with 2% vol. content, is used as the displacement fluid.

The technical result of the invention is an increase in the effectiveness of geological and engineering operations for killing the oil and gas wells having highly permeable hydraulic fractures.

The invention is illustrated by the following drawings.

Fig. 1 shows a schematic representation of a structure of a multiple emulsion.

Fig. 2 shows a table illustrating techniques and equipment for preparation and injection of the blocking agent (hereinafter - BA).

Fig. 3 shows a table illustrating the results of measuring density of the emulsion-suspension system (hereinafter - ESS) containing hydrophobic and hydrophilic nanoparticles of silicon dioxide.

Fig. 4 shows a table illustrating the results of measuring the density of the ESS containing hydrophobic nanoparticles of silicon dioxide and microparticles of ilmenite.

Fig. 5 shows a table illustrating the results of measurements of the aggregative stability (electrical stability) of the ESS containing hydrophobic and hydrophilic nanoparticles of silicon dioxide.

Fig. 6 shows a table illustrating the results of measurements of the aggregative stability (electrical stability) of the ESS containing hydrophobic nanoparticles of silicon dioxide and microparticles of ilmenite.

Fig. 7 shows a table illustrating the results of measurements of the aggregative stability (electrical stability) of the ESS containing hydrophobic nanoparticles of silicon dioxide and microparticles of trimarganese tetroxide.

Fig. 8 shows a table illustrating the results of measurements of the kinematic viscosity of the ESS containing hydrophobic and hydrophilic nanoparticles of silicon dioxide.

Fig. 9 shows a table illustrating the results of measurements of the kinematic viscosity of the ESS containing hydrophobic nanoparticles of silicon dioxide and microparticles of ilmenite.

Fig. 10 shows a table illustrating the results of measurements of the kinematic viscosity of the ESS containing hydrophobic nanoparticles of silicon dioxide and microparticles of trimanganese tetroxide.

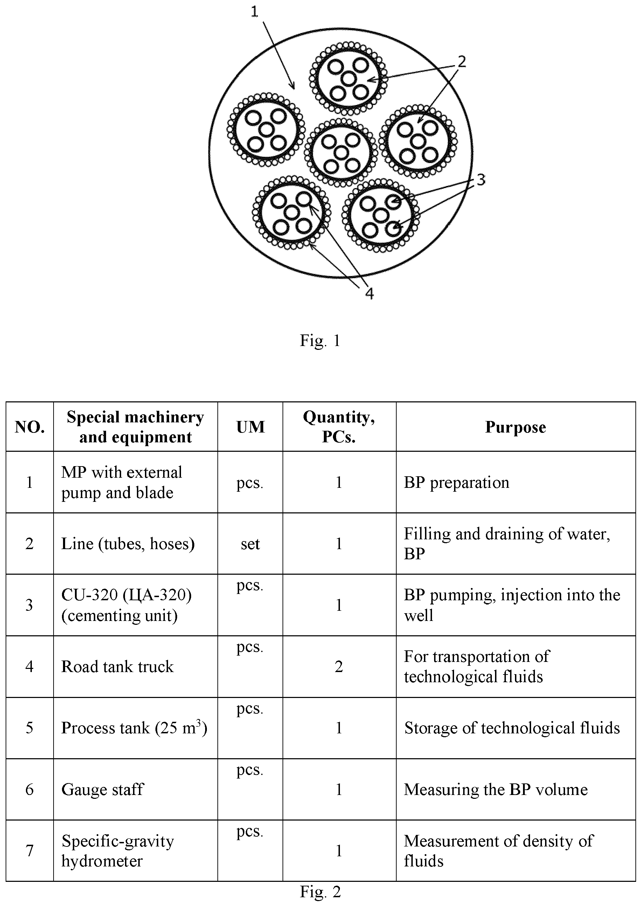

The content of plugging particles - nanoparticles with different surface-active properties - in the ESS allows preparing a multiple emulsion. The multiple emulsion is one of the most stable types of emulsions and allows adjusting rheological properties of the ESS in a wide range. Fig. 1 shows a schematic representation of the structure of a multiple emulsion, where 1 is a hydrocarbon medium, 2 is globules of an aqueous phase, 3 is globules of an hydrocarbon phase, 4 is adsorption-solvation layers of nanoparticles and surfactants.

During the adsorption of surface-active nanoparticles of silicon dioxide on the adsorption-solvation layers of the globules of aqueous and hydrocarbon phases of the emulsion, an additional layer is formed that prevents from coalescence of the globules.

The preparation of the blocking agent (BA) is made in a mixing plant (MP). The MP is a mixing system with a stirrer and an external centrifugal pump.

The necessary equipment for preparing the blocking agent is indicated in Fig. 2.

For wells having injectivity less than 350 $m^3$/day, a tank for preparing the emulsion system is filled with (% vol.) diesel fuel or processed oil from a processing facility - 10-30, then the centrifugal pump is started for circulation and a blade mixer is started, then the emulsifier - 2- 3, a colloidal solution of hydrophobic nanoparticles of silicon dioxide in propylene glycol monomethyl ether and water - 0.5-1, hydrophilic nanoparticles of silicon dioxide - 1-3, an aqueous solution of calcium chloride or potassium chloride - the rest, are sequentially dispersed in the diesel fuel.

One of the following compositions can be used as plugging particles - hydrophilic nanoparticles of silicon dioxide, (% vol.):

- a silicon dioxide - 30-31 in isopropanol - 67-69 and methyl alcohol - the rest;
- a silicon dioxide - 29-31 in ethylene glycol - the rest;
- a dry amorphous silicon dioxide with a particle size of from 5 to 500 nm.

A solid content of amorphous silicon dioxide is 92-99% by weight, the rest is impurities remaining after production. The impurities can include, in particular, the following substances (% by weight): non-volatile substances with hydrofluoric acid (0.2-0.5), nitrates (0.002-0.005), sulfates (0.015), chlorides (0.001-0.005), iron (0.002-0.005), heavy metals (0.003-0.007), etc. according to GOST 9428-73 "Reagents. Silicon (IV) oxide. Technical conditions (with Changes N 1, 2)". Exactly what kind of impurities are contained in the solid amorphous silicon dioxide is not an essential feature of the present invention, since it does not affect the achievement of the claimed technical result.

For wells having injectivity greater than 350 $m^3$/day, a tank for preparing the emulsion system is filled with (% vol.) diesel fuel or processed oil from a processing facility - 10-30, then the centrifugal pump is started for circulation and a blade mixer is started, then the emulsifier, a colloidal solution of nanoparticles of silicon dioxide - 0.5-1, microparticles of ilmenite or trimarganese tetroxide with a particle size from 0.2 to 5 $\mu$m as plugging particles - 2-5, and also an aqueous solution of calcium chloride or potassium chloride - the rest, are sequentially dispersed in the diesel fuel.

Both for the wells with injectivity less than 350 $m^3$/day, and for the wells with injectivity greater than 350 $m^3$/day, a composition containing (% vol.): ethers of higher unsaturated fatty acids (linoleic, oleic, linolenic) and resin acids - 40-42, an amine oxide - 0.7-1, a high-molecular organic heat stabilizer - 0.5-1, diesel fuel (summer or winter one) - the rest, can be used.

The input of the components of the ESS into the hydrocarbon base is performed sequentially in the specified order through an ejector using a vacuum hose. The speed of loading the components is limited by the suction capacity of the ejector.

The containers used should be equipped with blade or other mixers, ensuring a constant and uniform distribution of the reagents throughout the volume. In order to ensure obtaining and maintaining stability of the properties of the ESS it is recommended using reversible blade mixers.

The quality and stability of the properties of the prepared ESS depend on coverage of the entire volume of the tank with the mixing, the cleanliness of the containers, the speed of input of the components and the time of dispersion. It is recommended using a container with "beveled" corners (shape close to cylindrical).

Quality control of the ESS preparation is carried out by testing the ESS sedimentation stability. The test is considered positive if after holding the ESS at a room temperature for 2 hours, the aqueous phase is separated in the volume not exceeding 3% of the total volume of the ESS.

A calculation of a volume of the blocking agent is given below.

The BA volume, ($V_{BA}$), $m^3$ is determined by the volumes of opened-up perforation interval, dib hole and safety margin, according to the formula:

$$V_{BA} = (h_{cb} - h_{up} + h_{mrg}) * V_{sp} + 0.0007 * h_{st} + V_{disp}, \ m^3 \tag{1}$$

where:

> $h_{cb}$- level of current bottom hole, m;
> $h_{up}$- level of upper mark of the perforation interval, m;
> $h_{mrg}$ - level of safety margin, m (with a production column less than 500 m in depth ≈ 25 meters);
> $V_{sp}$- specific internal volume of casing string, $m^3$ per 11. meter;
> 0.0007 is the coefficient of BA consumption for wetting tube walls;
> $h_{st}$- setting depth;
> $V_{disp}$- volume of BA displacement into formation, $m^3$.

Volume of BA displacement into formation $V_{disp}$ is determined by the following formula:

$$V_{disp} = 1/K_a + 0.2 * (h_{opn})^{1/2}, m^3, \qquad (2)$$

where:

> $h_{opn}$- opened-up perforation interval, m
> $K_a$ is an anomaly coefficient, where $K_a = P_{formation}/ P_{hydrst}$, where $P_{formation}$ means formation pressure, and $P_{hydrst}$ means hydrostatic pressure.

Criteria for calculating the level of safety margin $h_{mrg}$ - upper limit of the BA installation (with a production column greater than 500 m in depth):

1) When a suspension of an electric centrifugal pump (ECP) is present, the BA is installed from the current bottom-hole to an interval of 50 m above the upper perforations, but below the pump intake by 50 m:

$$h_{mrg} = (h_{up}+50\ m) - h_{cb} \qquad (3)$$

where:

> $h_{up}$- level of upper perforations, m;
> $h_{cb}$ - level of current bottom hole, m;

2) If there is a packer, the BA is installed from the current bottom hole to the packer installation interval:

$$h_{mrg} = (h_{pack} - h_{cb}), \qquad (4)$$

where:

> $h_{pack}$- level of a packer device installation, m;
> $h_{cb}$ - level of current bottom-hole, m;

3) When coiled tubing (CT) with a packer is used, the BA is installed from the current bottom hole to the packer installation interval in the way similar to formula 4.
4) When CT without a packer is used, the BA is installed from the bottom-hole to the interval of 50 m above the upper perforations:

$$h_{mrg} = (h_{up}+50\ m) - h_{cb}, \qquad (5)$$

where:

> $h_{up}$- level of upper perforations, m;
> $h_{cb}$ - level of current bottom hole, m;

The additional volume of BA for wetting the walls is determined on the basis of the minimum norm of 1 m$^3$ per a well, the estimated BA consumption for wetting is 0.7 dm$^3$/1 meter of tube setting. The upper limit of the BA installation should be not less than 50 m lower than the receipt of the downhole pumping equipment (DPE) to ensure circulation when stabilizing a well during killing.

Installation of the BA is performed by standard methods: "direct injection" or "reinjection", depending on availability, type of underground equipment and structural features of a well. The method of "re-injection" through drill string-casing annulus is preferable.

The well-killing by "direct injection" is not recommended when an electric centrifugal pump (ECP) or a sucker-rod pump (SRP) is submerged since there is a risk of pipe string twist-off during an increase in pressure when the BA is displaced through the hole of the knock-off valve.

In absence of leak tightness of a casing string, a method of "direct injection" can be used for installing BA, with a maximum allowable pressure limited to 35 atm per a tubing string with DPE.

The emulsion system with these components is not designed for killing wells with a casing string lacking leak tightness.

Installing the BA by direct injection:

1) The volume of the BA is less than the volume of tubing
The first stage is the injection of BA into the tubing up to the bottom of the tubing (suspension of a pump) during circulation with an open casing valve.
The blocking agent is pumped into the tubing in the volume of the tubing empty space and is moved to the tubing bottom (funnel cut) by the well-killing fluid during circulation in the volume:

$$V_{(circ)} = V_{(tub)} - V_{(rod)} - V_{(BA)} \qquad (6)$$

where:

$V_{(circ)}$ - volume of the well-killing fluid, injected with an open casing valve, to move the BA to the tubing bottom, m$^3$;
$V_{(tub)}$ - internal volume of tubing, m$^3$;
$V_{(rod)}$ - displacement of drill-rods, m$^3$; (when ECP $V_{(rod)}$ = 0);
$V_{(BA)}$- volume of the blocking agent, m$^3$.

The second stage is displacement of BA on the bottom with the casing valve closed by the well-killing fluid in the volume:

$$V_{(disp)} = 0.001 * V_{(c.spec)} * (h_{(cb)} - h_{(tub)}) - V_{(BA)} + 1 = V_{(well\ under\ DPE)} - V_{(BA)} + 1 \qquad (7)$$

where:

$V_{(disp)}$ - volume of the well-killing fluid, injected with the casing valve closed (for displacement), m$^3$;
0.001 - factor of recalculation of dm$^3$ (1) into m$^3$;
$V_{(c.spec)}$ - specific internal volume of casing under DPE, dm$^3$/m,
$h_{(tub)}$ - depth of pump suspension or tubing, m;
$h_{(cb)}$ -depth of the current bottom hole, m;
$V_{(BA)}$ - volume of blocking agent, m$^3$;
V(well under DPE) - volume of well under DPE, m$^3$;
1- reserve of volume of the well-killing fluid for BA displacement, m$^3$.

2) The volume of BA is greater than the volume of tubing
The first stage is the injection of BA into the tubing in the volume of the tubing empty space (up to the pump suspension) during circulation with an open casing valve for displacement.

$$V_{(BA-circ)} = V_{(tub)} - V_{(rod)} \qquad (8)$$

where:

> $V_{(BA-circ)}$ - volume of the blocking agent, injected with a closed casing valve, $m^3$;
> $V_{(tub)}$ - internal volume of tubing, $m^3$;
> $V_{(rod)}$ - displacement of drill-rods, $m^3$; (when ECP $V_{(rod)}$ = 0);

The second stage is the injection of the remaining volume of BA and its displacement on the bottom with the closed casing valve by the well-killing fluid in the volume:

$$V_{(disp)} = V_{(tub)} - V_{(rod)} + V_{(well\ under\ DPE)} - V_{(BA)} + 1 \qquad (9)$$

$$V_{(disp)} = 0.001 * V_{(tub.spec)} * h_{(tub)} - V_{(rod)} + 0.001 * V_{(c.spec)} * (h_{(cb)} - h_{(tub)}) - V_{(BA)} + 1 \qquad (10)$$

where:

> $V_{(disp)}$ - volume of the well-killing fluid, injected for displacement with the closed casing valve, $m^3$;
> 0.001 - factor of recalculation of $dm^3$ (1) into $m^3$;
> $V_{(c.spec)}$ - specific internal volume of casing under DPE, $dm^3/m$,
> $h_{(tub)}$) - depth of pump suspension or tubing, m;
> $h_{(cb)}$ -depth of the current bottom hole, m;
> $V_{(tub.spec)}$ - specific internal volume of tubing, $dm^3/m$,
> $V_{(rod)}$ - displacement of drill-rods, $m^3$; (when ESP $V_{(rod)}$ = 0);
> $V_{(BA)}$ - volume of blocking agent, $m^3$;
> V(well under DPE) - volume of well under DPE, $m^3$;
> $V_{(tub)}$ - internal volume of tubing, $m^3$;
> 1- reserve of volume of the well-killing fluid for BA displacement into formation, $m^3$.

When displacing the BA to the bottom hole during the well killing by direct injection, it is recommended not to exceed the maximum pressure on the pump suspension, proof pressure of the casing and cable glands (as a rule, up to a maximum of 60 atm).

After installing the BA in the bottom hole, the well kill operation is terminated by replacing the annular volume of the well fluid with the estimated volume of the well-killing fluid:

$$V_{(repl.)} = 0.001 * V_{(an.spec)} * h_{(tub)} * 1.5 \qquad (11)$$

where:

> $V_{(repl.)}$ is the volume of well-killing fluid injected into the tubing during circulation to replace annular fluid, $m^3$;
> 0.001 - factor of recalculation of $dm^3$ (1) into $m^3$;
> $V_{(an.spec)}$ - specific volume of the annular space, $dm^3/m$;
> $h_{(tub)}$) - depth of pump suspension or tubing, m;
> 1.5 - well-killing fluid reserve for a complete washing until discharge of clear well-killing solution to the wellhead.

Installation of BA when killing by reinjection:

1) The first stage is injection of BA into the annular space and bringing it up to the tubing bottom (or the pump suspension) during circulation with open tubing valve for displacement by the well-killing fluid in the volume.

$$V_{(circ)} = V_{(an.)} - V_{(BA)} \qquad (12)$$

where:

> $V_{(circ)}$) - volume of the well-killing fluid, injected with the opened tubing valve, $m^3$;

$V_{(an.)}$ - volume of annular space up to the tubing bottom or to the pump suspension, m$^3$;
$V_{(BA)}$ - volume of blocking agent, m$^3$;

2) The second stage is displacement of the BA with the closed tubing valve by the well-killing fluid in the volume:

$$V_{(disp)} = V_{(an.)} + V_{(well\ under\ DPE)} - V_{(BA)} + 1 \qquad (13)$$

$$V_{(disp)} = 0.001 * V_{(an.spec)} * h_{(tub)} + 0.001 * V_{(c.spec)} * (h_{(cb)} - h_{(tub)}) - V_{(BA)} + 1 \qquad (14)$$

where:

$V_{(disp)}$ - volume of the well-killing fluid, injected for displacement with the closed tubing valve, m$^3$;
$0.001$ - factor of recalculation of dm$^3$ (1) into m$^3$;
$V_{(an.spec)}$ - specific internal volume of the annular space, dm$^3$/m;
$V_{(an.)}$ - volume of annular space up to the tubing bottom or to the pump suspension, m$^3$; $h_{(tub)}$) - depth of pump suspension or tubing, m;
$h_{(cb)}$ -depth of the current bottom hole, m;
$V_{(ba)}$ - volume of blocking agent, m$^3$;
V(well under DPE) - volume of well under DPE, m$^3$;
$1$- reserve of the volume of the well-killing fluid for BA displacement, m$^3$.

When displacing the BA on the bottom hole by re-injection method, it is recommended not to exceed the pressure of cable entry pressuring (as a rule 80 atm), the pressure of casing string pressuring.

An aqueous solution of calcium chloride or potassium chloride containing a water repellent agent is used as a displacement fluid. Water repellent agents of "IVV-1"($И$BB-1) or "ChAS-M" ($Ч$AC-M) brands with 2% vol. content can be used both for the wells with injectivity less than 350 m$^3$/day, and for the wells with injectivity greater than 350 m$^3$/day.

The water repellent IVV-1 is produced according to TU 2482-111-56856807-2016 and is a mixture of alkyl dimethyl benzyl ammonium chloride and a quaternary ammonium salt of a tertiary amine, obtained by condensation of alkyl dimethyl amine and benzyl chloride.

The water repellent ChAS-M is produced according to TU 20.41.20-125-56856807-2017 and is a water-alcohol solution of quaternary ammonium salts of alkyl dimethylamine.

After the BA is installed, the remaining volume (annular or tubular) is filled in and washed until clear with a surfactant water solution, then the casing and tubular valves are closed, and the well is left for 1 hour for stabilization. After that, the excess pressure is measured in the annular and tubular spaces and, if necessary, stabilized. The excess pressure is released through process pipes into a channel.

The BA is considered to be installed in the specified interval after pumping the estimated amount of the well-killing fluid for delivery by elevator (in circulation mode), and displacement with the estimated amount of the well-killing fluid when it is installed on the bottom hole (in displacement mode). At the end of the displacement mode, the wellhead pressure may increase by 15-20 atm while installation of the BA on the bottom-hole.

To prevent from premature removal of the BA from the BHZ during pulling and running operations in a well, killed with the use of the BA, it is forbidden to exceed the speed limit of the downhole equipment pulling.

It is recommended to remove the BA by transferring the well to oil and causing inflow of fluids into the well. If there is no possibility to transfer the well to oil, the BA may be removed by transferring the well to a surfactant water solution and causing inflow of fluids into the well. The inflow into the well may be caused by conventional methods of well development. It is not recommended to cause the inflow of fluids into the well by starting an ECP. Residues of the BA in the hydrocarbon filtration channels are destroyed spontaneously during the inflow of well production during the first 24-hours.

In order to remove the BA without causing inflow from the formation, it is necessary to inject oil into the BA installation interval. The recommended oil consumption is the volume 0.6-0.8 m$^3$ per 1 m$^3$ of BA with displacement into formation.

Laboratory studies of ESS physical properties

Samples with different volumetric contents of components were prepared to study the physical properties of the ESS.

As a result of the experiments, the following ESS parameters were determined:

- Density;
- Aggregative stability;
- Thermostability;
- Kinematic viscosity.

After preparing the ESS samples, they were held for at least 2 hours at room temperature prior to starting the experiments.

Study of ESS density

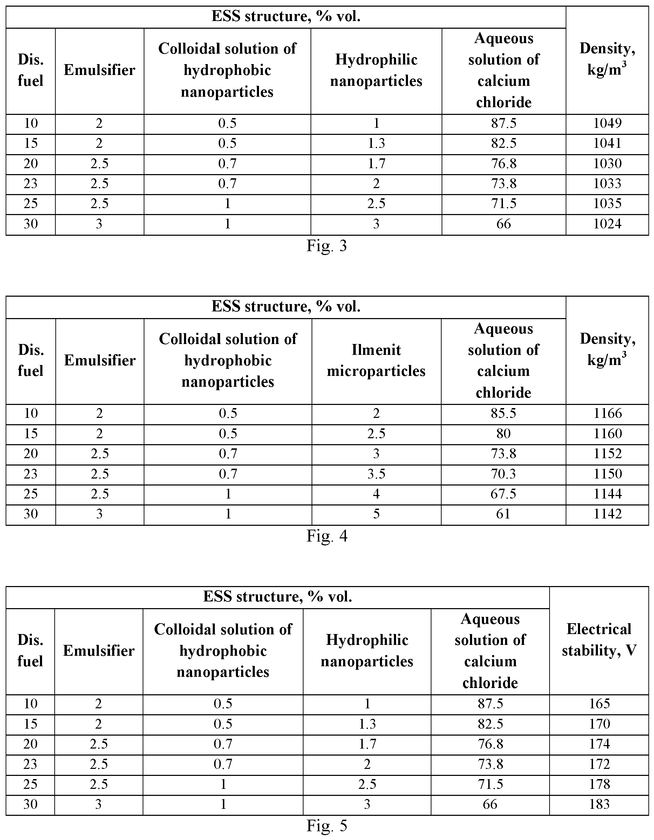

The results of measuring the ESS density (picnometer method) are shown in Fig. 3 and 4.

Study of ESS aggregative stability

Aggregative stability is the ESS ability to maintain the internal phase dispersity degree. The evaluation was performed according to the index of electrostability - measurements of values of electric voltage corresponding to the moment of destruction of the ESS enclosed between the electrodes of measuring cell of the device. The experiments were performed in FANN device. The results of measuring the ESS aggregative stability (electrical stability) are shown in Figs. 5, 6, and 7.

Study of ESS thermostability

Measurement of the ESS thermostability was performed by holding in hermetically sealed measuring cylinders in an oven for 24 hours at a specified thermal regime of 80 °C. The test was considered positive (the sample is stable), if not more than 2% of the total ESS volume of water or hydrocarbon phase was separated from the ESS after 24 hours of thermostating. As a result of experiments on thermal stability, it was determined that all samples are stable for 24 hours.

Study of ESS kinematic viscosity

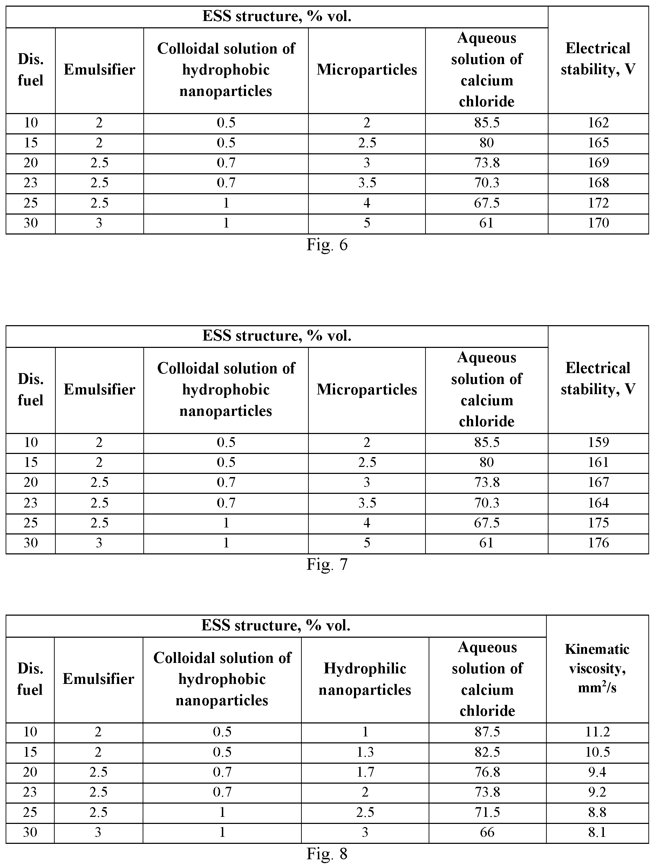

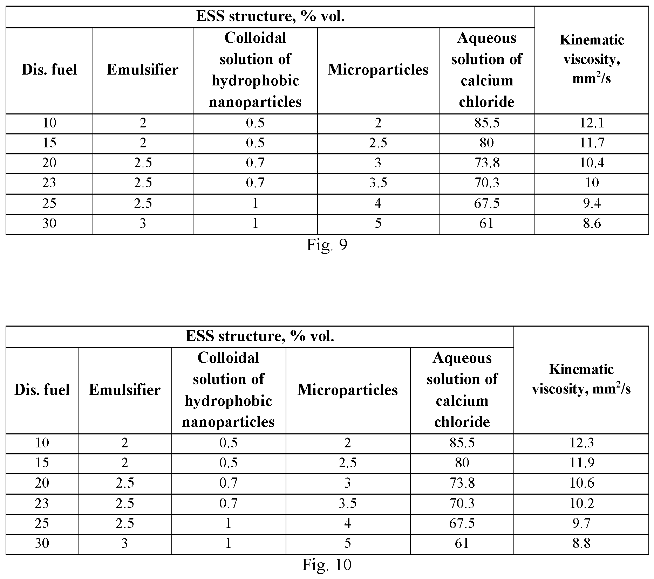

The results of studies of the ESS kinematic viscosity are shown Figs. 8, 9, and 10. The measurements were taken at a temperature of 20 °C (error of temperature measuring is $\pm$ 0.1 °C) in VPZh-2 (ВПЖ-2) viscometer with a viscometer constant of 0.09764. Prior to the experiments, the ESS was stirred in a mechanical stirrer at a predetermined speed of 1200 rpm for 20 minutes.

The results of the complex of basic laboratory studies of the ESS physical properties confirmed the high technological properties of the developed composition. The most important parameters of the ESS from the point of industrial application are high thermal stability and aggregative stability, as well as the ability to regulate the ESS viscosity properties, changing the volume fraction of the constituent components depending on the porosity and permeability properties and geological and physical characteristics of a bottom hole zone (BHZ).

The embodiments of the method of killing oil and gas wells having highly permeable hydraulic fractures when well injectivity is less than 350 $m^3$/day are given below.

Exemplary embodiments of the claimed method

Example 1

The implementation of the method in an oil well with the injectivity less than 350 $m^3$/day. The water cut before the killing is 77%.

Preparations were made in the well: the well was stopped, discharged, the valves of the well head equipment were checked. The presence of circulation in the well was checked and the decision on a method for injection of the process fluids was made - reinjection was chosen. The value of the current formation pressure was determined. The well-killing equipment was arranged according to the approved scheme. The equipment was connected and the downstream line was pressurized by the pressure exceeding the expected working pressure 1.5 times, observing safety measures. The downstream line was equipped with a back pressure valve.

Upon completion of the preparations, technological operations were started to kill the well.

At the first stage, the ESS of the following composition, % vol: a diesel fuel - 10, an emulsifier - 2, a colloidal solution of hydrophobic nanoparticles of silicon dioxide - 0.5, a hydrophilic nanoparticles of silicon dioxide - 0.6, an aqueous solution of potassium chloride with a density of 1140 kg/m$^3$ - 86.9, was injected into BHZ. At the same time, the emulsifier contains (% vol.): ethers of higher unsaturated fatty acids (linolenic) and resin acids - 40, an amine oxide - 0.7, a high molecular organic heat stabilizer (bentonite) - 0.5, a diesel fuel (summer) - 58.8. The colloidal solution of hydrophobic nanoparticles of silicon dioxide contains (% vol.): amorphous silicon dioxide - 32.5, propylene glycol monomethyl ether - 67, water - 0.5. The hydrophilic nanoparticles of silicon dioxide contain (% vol.): silicon dioxide - 30, isopropanol - 69, methyl alcohol - 1.

At the second stage, an aqueous solution of calcium chloride with IVV-1($И$BB-1) water repellent agent (2% vol.) with a density of 1125 kg/m$^3$ in a volume of 34 m$^3$ was injected into the well.

The well was killed in a single cycle without any complications. The water cut after bringing the well on to stable production was 65%, and after three months of the well operation it was 60%.

Example 2

Henceforward, all preparations were made in accordance with the procedure specified in Example 1.

The implementation of the method by direct injection in an oil well with the injectivity less than 350 m$^3$/day. The water cut before the killing is 84%.

At the first stage, the ESS of the following composition, % vol: a diesel fuel - 13, an emulsifier - 2, a colloidal solution of hydrophobic nanoparticles of silicon dioxide - 0.5, hydrophilic nanoparticles of silicon dioxide - 1, an aqueous solution of potassium chloride with a density of 1160 kg/m$^3$ - 83.5, was injected into BHZ. At the same time, the emulsifier contains (% vol.): ethers of higher unsaturated fatty acids (linolenic) and resin acids - 42, an amine oxide - 0.9, a high molecular organic heat stabilizer (lime) - 0.8, a diesel fuel (winter) - 56.3. The colloidal solution of hydrophobic nanoparticles of silicon dioxide contains (% vol): an amorphous silicon dioxide - 31, propylene glycol monomethyl ether - 68.5, water - 0.5. The hydrophilic nanoparticles of silicon dioxide contain (% vol): silicon dioxide - 30.5, isopropanol - 68, methyl alcohol - 0.5.

At the second stage, an aqueous solution of potassium chloride with IVV-1($И$BB-1) water repellent agent (2% vol.) with a density of 1140 kg/m$^3$ in a volume of 27 m$^3$ was injected into the well.

The well was killed in a single cycle without any complications. The water-cut after bringing the well on to stable production was 76%, and after three months of the well operation it was 73%.

Example 3

The implementation of the method by reinjection in an oil well with the injectivity less 350 m$^3$/day. The water-cut before killing the well is 65%.

At the first stage, the ESS of the following composition, % vol: a diesel fuel - 17, an emulsifier - 3, a colloidal solution of hydrophobic nanoparticles of silicon dioxide - 0.7, hydrophilic nanoparticles of silicon dioxide - 1.5, an aqueous solution of potassium chloride with a density of 1145 kg/m$^3$ - 87.8, was injected into BHZ. At the same time, the emulsifier contains (% vol.): ethers of higher unsaturated fatty acids (linoleic) and resin acids - 40, an amine oxide - 0.7, a high molecular organic heat stabilizer (bentonite) - 1, a diesel fuel (winter) - 58.3. The colloidal solution of hydrophobic nanoparticles of silicon dioxide contains (% vol): an amorphous silicon dioxide - 31, a propylene glycol monomethyl ether - 68.5, water - 0.5. The ydrophilic nanoparticles of silicon dioxide contain (% vol): a silicon dioxide - 30, an isopropanol - 68.5, a methyl alcohol - 1.5.

At the second stage, an aqueous solution of potassium chloride with IVV-1($И$BB-1) water repellent agent (2% vol) with a density of 1130 kg/m$^3$ in a volume of 42 m$^3$ was injected into the well.

The well was killed in a single cycle without any complications. The water cut after bringing the well on to stable production was 60%, and after three months of the well operation it was 58%.

Example 4

The implementation of the method by reinjection in an oil well with the injectivity less than 350 m$^3$/day. The water cut before killing the well is 53%.

At the first stage, the ESS of the following composition, % vol: a diesel fuel - 30, an emulsifier - 3, a colloidal solution of hydrophobic nanoparticles of silicon dioxide - 1, hydrophilic nanoparticles of silicon dioxide - 3, an aqueous solution of potassium chloride with a density of 1130 kg/m$^3$ - 63, was injected into BHZ. At the same time, the emulsifier contains (% vol): ethers of higher unsaturated fatty acids (linoleic) and resin acids - 41, an amine oxide - 1, a high molecular organic heat stabilizer (bentonite) - 1, diesel fuel (summer) - 57. The colloidal solution of hydrophobic nanoparticles of silicon dioxide contains (% vol): amorphous silicon dioxide - 31.5, propylene glycol monomethyl ether - 68, water - 0.5. The hydrophilic silica nanoparticles contain (% vol): silicon dioxide - 31, isopropanol - 67, methyl alcohol - 2.

At the second stage, an aqueous solution of potassium chloride with IVV-1($И$BB-1) water repellent agent (2% vol) with a density of 1100 kg/m$^3$ in a volume of 26 m$^3$ was injected into the well.

The well was killed in a single cycle without any complications. The water cut after bringing the well onto stable production was 46%, and after three months of the well operation it was 42%.

Example 5

The implementation of the method by direct injection in a gas well with the injectivity less than 350 m$^3$/day.

At the first stage, the ESS of the following composition, % vol: a diesel fuel - 28, an emulsifier - 2.5, a colloidal solution of hydrophobic nanoparticles of silicon dioxide - 1, hydrophilic nanoparticles of silicon dioxide - 3, an aqueous solution of potassium chloride with a density of 1195 kg / m3 - 65.5, was injected into BHZ. At the same time, the emulsifier contains (% vol): ethers of higher unsaturated fatty acids (linolenic) and resin acids - 42, an amine oxide - 1, a high molecular organic heat stabilizer (lime) - 1, diesel fuel (summer) - 56. The colloidal solution of hydrophobic nanoparticles of silicon dioxide contains (% vol): amorphous silicon dioxide - 32, propylene glycol monomethyl ether - 67.5, water - 0.5. The hydrophilic silica nanoparticles contain (% vol): silicon dioxide - 29, isopropanol - 67, ethylene glycol - 71.

At the second stage, an aqueous solution of potassium chloride with

ChAS-M (ЧАС-

M)

water repellent agent (2% vol) with a density of 1180 kg/m$^3$ in a volume of 36 m$^3$ was injected into the well.

The well was killed in a single cycle without any complications.

Example 6

The implementation of the method by direct injection in an oil well with the injectivity less than 350 m$^3$/day. The water-cut before killing the well is 80%.

At the first stage, the ESS of the following composition, % vol: a diesel fuel - 30, an emulsifier - 3, a colloidal solution of hydrophobic nanoparticles of silicon dioxide - 1, hydrophilic nanoparticles of silicon dioxide - 3, an aqueous solution of potassium chloride with a density of 1150 kg/m$^3$ - 63, was injected into BHZ. At the same time, the emulsifier contains (% vol): ethers of higher unsaturated fatty acids (linoleic) and resin acids - 40, an amine oxide - 0.7, a high molecular organic heat stabilizer (lime) - 1, diesel fuel (winter) - 58.3. The colloidal solution of hydrophobic nanoparticles of silicon dioxide contains (% vol): amorphous silicon dioxide - 30, propylene glycol monomethyl ether - 69.5, water - 0.5. The hydrophilic nanoparticles of silicon dioxide contain (% vol): silicon dioxide - 31, ethylene glycol - 69.

At the second stage, an aqueous solution of calcium chloride with ChAS-M ($ЧАС$-M) water repellent agent (2% vol) with a density of 1135 kg/m$^3$ in a volume of 36 m$^3$ was injected into the well.

The well was killed in a single cycle without any complications. The water cut after bringing the well on to stable production was 70%, and after three months of the well operation it was 66%.

Example 7

The implementation of the method by reinjection in an oil well with the injectivity less that 350 m$^3$/day. The water cut before killing the well was 45%.

At the first stage, the ESS of the following composition, % vol: a diesel fuel - 20, an emulsifier - 2.5, a colloidal solution of hydrophobic nanoparticles of silicon dioxide - 0.7, hydrophilic nanoparticles of silicon dioxide - 1.5, a water solution of potassium chloride with a density of 1125 kg / m3 - 75.3, was injected into BHZ. At the same time, the emulsifier contains (% vol): ethers of higher unsaturated fatty acids (linoleic) and resin acids - 40, an amine oxide - 0.7, a high molecular organic heat stabilizer (lime) - 1, diesel fuel (winter) - 58.3. The colloidal solution of hydrophobic nanoparticles of silicon dioxide contains (% vol): amorphous silicon dioxide - 31, propylene glycol monomethyl ether - 68.5, water - 0.5. The hydrophilic nanoparticles of silicon dioxide contain (% vol): silicon dioxide - 30, isopropanol - 68.5, methyl alcohol - 1.5.

At the second stage, an aqueous solution of calcium chloride with IVV-1($И$BB-1) water repellent agent (2% vol) with a density of of 1130 kg/m$^3$ in a volume of 31 m$^3$ was injected into the well.

The well was killed in a single cycle without any complications. The water cut after bringing the well on to stable production was 35%, and after three months of the well operation it was 39%.

Example 8

The implementation of the method by direct injection in a gas well with the injectivity less than 350 m$^3$/day.

At the first stage, the ESS of the following composition, % vol: a diesel fuel - 25, an emulsifier - 3, a colloidal solution of hydrophobic nanoparticles of silicon dioxide - 1, hydrophilic nanoparticles of silicon dioxide - 3, an aqueous solution of calcium chloride with a density of 1180 kg/m$^3$ - 68, was injected into BHZ in a volume of 3 m$^3$/m. At the same time, the emulsifier contains (% vol): ethers of higher unsaturated fatty acids (linolenic) and resin acids - 42, an amine oxide - 1, a high molecular organic heat stabilizer (lime) - 1, a diesel fuel (summer) - 56. The colloidal solution of hydrophobic nanoparticles of silicon dioxide contains (% vol): amorphous silicon dioxide - 32, propylene glycol monomethyl ether - 67.5, water - 0.5. The hydrophilic silica nanoparticles contain (% vol): silica - 29, ethylene glycol - 71.

At the second stage, an aqueous solution of potassium chloride with ChAS-M($Ч$ACM) water repellent agent (2% vol) with a density of 1175 kg/m$^3$ density in a volume of 30 m$^3$ was injected into the well.

The well was killed in a single cycle without complications.

Example 9

The implementation of the method by direct injection in an oil well with the injectivity less than 350 m$^3$/day. The watercut before killing the well is 64%.

At the first stage, the ESS of the following composition, % vol: a diesel fuel - 15, an emulsifier - 2.5, a colloidal solution of hydrophobic nanoparticles of silicon dioxide - 0.5, dry hydrophilic nanoparticles of silicon dioxide with particle size from 5 to 500 nm - 1, an aqueous solution of potassium chloride with a density of 1130 kg/m$^3$ - 81, was injected into BHZ in the volume of 3.2 m$^3$/m. At the same time, the emulsifier contains (% vol): ethers of higher unsaturated fatty acids (oleic) and resin acids - 42, an amine oxide - 1, a high molecular organic heat stabilizer (bentonite) - 1, a diesel fuel (winter) - 56. The colloidal solution of hydrophobic nanoparticles of silicon dioxide contains (% vol): amorphous silicon dioxide - 32, propylene glycol monomethyl ether - 67.5, water - 0.5.

At the second stage, an aqueous solution of potassium chloride with ChAS-M($Ч$ACM) water repellent agent (2% vol) with a density of 1120 kg/m$^3$ density in a volume of 27 m$^3$ was injected into the well.

The well was killed in a single cycle without any complications. The water cut after bringing the well on to stable production was 55%, and after three months of the well operation it was 57%.

Example 10

The implementation of the method by reinjection in an oil well with the injectivity less than 350 m$^3$/day. The water cut before killing the well is 48%.

At the first stage, the ESS of the following composition, % vol: diesel fuel - 20, an emulsifier - 2.5, a colloidal solution of hydrophobic nanoparticles of silicon dioxide - 0.8, dry hydrophilic nanoparticles of silicon dioxide with a particle size of from 5 to 500 nm - 2.5, an aqueous solution of potassium chloride with a density of 1120 kg/m$^3$ - 74.2, was injected into BHZ in the volume of 3 m$^3$/m. At the same time, the emulsifier contains (% vol): ethers of higher unsaturated fatty acids (oleic) and resin acids - 42, an amine oxide - 1, a high molecular organic heat stabilizer (lime) - 1, diesel fuel (winter) - 56. The colloidal solution of hydrophobic nanoparticles of silicon dioxide contains (% vol): amorphous silicon dioxide - 30.5, propylene glycol monomethyl ether - 69, water - 0.5.

At the second stage, an aqueous solution of potassium chloride with ChAS-M($Ч$ACM) water repellent agent (2% vol) with a density of 1100 kg/m$^3$ in a volume of 34 m$^3$ was injected into the well.

The well was killed in a single cycle without any complications. The water cut after bringing the well on to stable production was 36%, and after three months of the well operation it was 41%.

Example 11

The implementation of the method by direct injection in an oil well with the injectivity less than 350 m$^3$/day. The

water cut before killing the well is 53%.

At the first stage, the ESS of the following composition, % vol: diesel fuel - 30, an emulsifier - 2, a colloidal solution of hydrophobic nanoparticles of silicon dioxide - 1, dry hydrophilic nanoparticles of silicon dioxide with particle size from 5 to 500 nm - 3, an aqueous solution of potassium chloride with a density of 1110 kg/m$^3$ - 64, was injected into BHZ in the volume of 4 m$^3$/m. At the same time, the emulsifier contains (% vol): ethers of higher unsaturated fatty acids (oleic) and resin acids - 42, an amine oxide - 0.7, a high molecular organic heat stabilizer (lime) - 0.5, diesel fuel (summer) - 56.8. The colloidal solution of hydrophobic nanoparticles of silicon dioxide contains (% vol.): an amorphous silicon dioxide - 31, a propylene glycol monomethyl ether - 68, water - 1.

At the second stage, an aqueous solution of potassium chloride with ChAS-M($ЧАСМ$) water repellent agent (2% vol) with a density of 1090 kg/m$^3$ in a volume of 39 m$^3$ was injected into the well.

The well was killed in a single cycle without any complications. The water cut after bringing the well on to stable production was 40%, and after three months of the well operation it was 42%.

Example 12

The implementation of the method by direct injection in a gas well with the injectivity greater than 350 m$^3$/day.

At the first stage, the ESS of the following composition, % vol: diesel fuel - 20, an emulsifier - 2.5, a colloidal solution of hydrophobic nanoparticles of silicon dioxide - 0.7, microparticles of ilmenite with a size from 0.2 to 5 microns - 2, an aqueous solution of potassium chloride with a density of 1190 kg/m$^3$ - 74.8, was injected into BHZ in the volume of 4.5 m$^3$/m. At the same time, the emulsifier contains (% vol): ethers of higher unsaturated fatty acids (oleic) and resin acids - 40, an amine oxide - 1, a high molecular organic heat stabilizer (bentonite) - 1, diesel fuel (summer) - 58. The colloidal solution of hydrophobic nanoparticles of silicon dioxide contains (% vol): an amorphous silicon dioxide - 31.5, a propylene glycol monomethyl ether - 68, water - 0.5.

At the second stage, an aqueous solution of potassium chloride with ChAS-M($ЧАСМ$) water repellent agent (2% vol) with a density of 1175 kg/m$^3$ in a volume of 33 m$^3$ was injected into the well.

The well was killed in a single cycle without any complications.

Example 13

The implementation of the method by direct injection in a gas well with the injectivity greater than 350 m$^3$/day.

At the first stage, the ESS of the following composition, % vol: diesel fuel - 25, an emulsifier - 3, a colloidal solution of hydrophobic nanoparticles of silicon dioxide - 1, microparticles of ilmenite with a size of from 0.2 to 5 microns - 5, an aqueous solution of potassium chloride with a density of 1175 kg/m$^3$ - 66, was injected into BHZ in the volume of 5.5 m$^3$/m. At the same time, the emulsifier contains (% vol): ethers of higher unsaturated fatty acids (linolenic) and resin acids - 42, an amine oxide - 0.8, a high molecular organic heat stabilizer (lime) - 0.7, diesel fuel (summer) - 56.5. The colloidal solution of hydrophobic nanoparticles of silicon dioxide contains (% vol): an amorphous silicon dioxide - 32.5, a propylene glycol monomethyl ether - 67, water - 0.5.

At the second stage, an aqueous solution of calcium chloride with ChAS-M($ЧАСМ$) water repellent agent (2% vol) with a density of 1165 kg/m$^3$ in a volume of 22 m$^3$ was injected into the well.

The well was killed in a single cycle without any complications.

Example 14

The implementation of the method by direct injection in a gas well with the injectivity greater than 350 m$^3$/day.

At the first stage, the ESS of the following composition, % vol: diesel fuel - 25, an emulsifier - 3, a colloidal solution of hydrophobic nanoparticles of silicon dioxide - 1, microparticles of ilmenite with a size of from 0.2 to 5 microns - 5, an aqueous solution of potassium chloride with a density of 1180 kg/m$^3$ - 66, was injected into BHZ in the volume of 5.5 m$^3$/m. At the same time, the emulsifier contains (% vol): ethers of higher unsaturated fatty acids (linolenic) and resin acids - 42, an amine oxide - 0.8, a high molecular organic heat stabilizer (lime) - 0.7, diesel fuel (summer) - 56.5. The colloidal solution of hydrophobic nanoparticles of silicon dioxide contains (% vol): an amorphous silicon dioxide - 32.5, a propylene glycol monomethyl ether - 67, water - 0.5.

At the second stage, an aqueous solution of potassium chloride with IVV-1($ИВВ-1$) water repellent agent (2% vol) with a density of 1175 kg/m$^3$ in a volume of 22 m$^3$ was injected into the well.

The well was killed in a single cycle without any complications.

Example 15

The implementation of the method by reinjection in an oil well with the injectivity greater than 350 m$^3$/day. The water cut before killing the well is 68%.

At the first stage, the ESS of the following composition, % vol: processed oil from a processing facility - 10, an emulsifier - 2.5, a colloidal solution of hydrophobic nanoparticles of silicon dioxide - 0.8, microparticles of ilmenite with a particle size from 0.2 to 5 microns - 2, an aqueous solution of potassium chloride with a density of 1180 kg / m3 - 84.7, was injected into BHZ in the volume of 4.2 m$^3$/m. At the same time, the emulsifier contains (% vol): ethers of higher unsaturated fatty acids (linoleic) and resin acids - 40, an amine oxide - 1, a high molecular weight organic heat stabilizer (bentonite) - 1, diesel fuel (summer) - 58. The colloidal solution of hydrophobic nanoparticles of silicon dioxide contains (% vol): an amorphous silicon dioxide - 31.5, a propylene glycol monomethyl ether - 68, water - 0.5.

At the second stage, an aqueous solution of potassium chloride with IVV-1($И$BB-1) water repellent agent (2% vol) with a density of 1160 kg/m$^3$ in a volume of 39 m$^3$ was injected into the well.

The well was killed in a single cycle without any complications. The water cut after bringing the well on to stable production was 55%, and after three months of the well operation it was 62%.

Example 16

The implementation of the method by reinjection in an oil well with the injectivity greater than 350 m$^3$/day. The water cut before killing the well is 76%.

At the first stage, the ESS of the following composition, % vol: processed oil from a processing facility - 12, an emulsifier - 3, a colloidal solution of hydrophobic nanoparticles of silicon dioxide - 1, microparticles of trimanganese tetroxide with particle size from 0.2 to 5 microns - 4, an aqueous solution of potassium chloride with a density of 1175 kg/m$^3$ - 80, was injected into BHZ in the volume of 6 m$^3$/m. At the same time, the emulsifier contains (% vol): ethers of higher unsaturated fatty acids (linoleic) and resin acids - 41, an amine oxide - 1, a high molecular organic heat stabilizer (bentonite) - 1, diesel fuel (summer) - 57. The colloidal solution of hydrophobic nanoparticles of silicon dioxide contains (% vol): an amorphous silicon dioxide - 32.5, a propylene glycol monomethyl ether - 67, water - 0.5

At the second stage, an aqueous solution of potassium chloride with ChAS-M($Ч$ACM) water repellent agent (2% vol) with a density of 1160 kg/m$^3$ in a volume of 44 m$^3$ was injected into the well.

The well was killed in a single cycle without any complications. The water cut after bringing the well on to stable production was 65%, and after three months of the well operation it was 69%.

Example 17

The implementation of the method by reinjection in an oil well with the injectivity greater than 350 m$^3$/day. The water cut before killing the well is 82%.

At the first stage, the ESS of the following composition, % vol: processed oil from a processing facility - 15, an emulsifier - 3, a colloidal solution of hydrophobic nanoparticles of silicon dioxide - 1, trimanganese tetroxide microparticles with a particle size of from 0.2 to 5 $\mu$m - 5, an aqueous solution of potassium chloride with a density of 1180 kg/m$^3$ - 76, was injected into BHZ in the volume of 7 m$^3$/m. At the same time, the emulsifier contains (% vol): ethers of higher unsaturated fatty acids (linolenic) and resin acids - 42, an amine oxide - 0.7, a high molecular organic heat stabilizer (lime) - 0.8, diesel fuel (winter) - 56.5. The colloidal solution of hydrophobic nanoparticles of silicon dioxide contains (% vol): an amorphous silicon dioxide - 32.5, a propylene glycol monomethyl ether - 67, water - 0.5.

At the second stage, an aqueous solution of potassium chloride with ChAS-M($Ч$ACM) water repellent agent (2% vol) with a density of 1160 kg/m$^3$ in a volume of 32 m$^3$ was injected into the well.

The well was killed in a single cycle without any complications. The water cut after bringing the well on to stable production was 73%, and after three months of the well operation it was 68%.

**Claims**

1. A method for killing oil and gas wells having highly permeable hydraulic fractures with injectivity below 350 m$^3$/day, comprising sequential injection of a blocking agent and displacement fluid into a bottom hole formation zone, wherein an emulsion suspension system is used as a blocking agent, the emulsion suspension system containing (%vol):

- diesel fuel or processed oil from a processing facility - 10-30,
- an emulsifier - 2-3,
- a colloidal solution of hydrophobic nanoparticles of silicon dioxide with a particle size of from 5 to 100 nm - 0.5-1, containing (% vol): silicon dioxide - 31-32.5, propylene glycol monomethyl ether - 67-69, water - the rest,
- hydrophilic nanoparticles of silicon dioxide - 1-3,
- an aqueous solution of calcium chloride or potassium chloride - the rest,

wherein a composition used as said emulsifier contains (% vol):

- ethers of higher unsaturated fatty acids and resin acids - 40-42,
- amine oxide - 0.7-1,
- a high-molecular organic heat stabilizer - 0.5-1,
- diesel fuel - the rest,

a composition used as the hydrophilic nanoparticles of silicon dioxide contains (% vol):

- silicon dioxide - 30-31 in isopropanol - 67-69 and methyl alcohol - the rest,
- or silicon dioxide - 29-31 in ethylene glycol - the rest,
- or dry amorphous silicon dioxide with a particle size of from 5 to 500 nm,

and an aqueous solution of calcium chloride or potassium chloride containing a water repellent agent of "IVV-1" ($И$BB-1) or "ChAS-M" ($Ч$AC-M) brand with 2% vol. content is used as a displacement fluid.

2. A method for killing oil and gas wells having highly permeable hydraulic fractures with injectivity above 350 m$^3$/day, comprising sequential injection of a blocking agent and displacement fluid into a bottom hole formation zone, wherein an emulsion suspension system is used as a blocking agent, the emulsion suspension system containing (% vol):

- diesel fuel or processed oil from a processing facility - 10-30,
- an emulsifier - 2-3,
- a colloidal solution of hydrophobic nanoparticles of silicon dioxide with a particle size of from 5 to 100 nm - 0.5-1, containing (% vol): silicon dioxide - 31-32.5, propylene glycol monomethyl ether - 67-69, water - the rest,
- hydrophilic microparticles of ilmenite or trimanganese tetroxide with a particle size of from 0.2 to 5 $\mu$m - 2-5,
- an aqueous solution of calcium chloride or potassium chloride - the rest,

wherein a composition used as said emulsifier contains (% vol):

- ethers of higher unsaturated fatty acids and resin acids - 40-42,
- amine oxide - 0.7-1,
- a high-molecular organic heat stabilizer - 0.5-1,
- diesel fuel - the rest,

a composition used as the hydrophilic nanoparticles of silicon dioxide contains (% vol):

- silicon dioxide - 30-31 in isopropanol - 67-69 and methyl alcohol - the rest,
- or silicon dioxide - 29-31 in ethylene glycol - the rest,
- or dry amorphous silicon dioxide with a particle size of from 5 to 500 nm,

and an aqueous solution of calcium chloride or potassium chloride containing a water repellent agent of "IVV-1" ($И$BB-1) or "ChAS-M" ($Ч$AC-M) brand with 2% vol. content is used as a displacement fluid.

Fig. 1

| NO. | Special machinery and equipment | UM | Quantity, PCs. | Purpose |
|---|---|---|---|---|
| 1 | MP with external pump and blade | pcs. | 1 | BP preparation |
| 2 | Line (tubes, hoses) | set | 1 | Filling and draining of water, BP |
| 3 | CU-320 (ЦА-320) (cementing unit) | pcs. | 1 | BP pumping, injection into the well |
| 4 | Road tank truck | pcs. | 2 | For transportation of technological fluids |
| 5 | Process tank (25 m³) | pcs. | 1 | Storage of technological fluids |
| 6 | Gauge staff | pcs. | 1 | Measuring the BP volume |
| 7 | Specific-gravity hydrometer | pcs. | 1 | Measurement of density of fluids |

Fig. 2

| ESS structure, % vol. | | | | | Density, kg/m³ |
|---|---|---|---|---|---|
| Dis. fuel | Emulsifier | Colloidal solution of hydrophobic nanoparticles | Hydrophilic nanoparticles | Aqueous solution of calcium chloride | |
| 10 | 2 | 0.5 | 1 | 87.5 | 1049 |
| 15 | 2 | 0.5 | 1.3 | 82.5 | 1041 |
| 20 | 2.5 | 0.7 | 1.7 | 76.8 | 1030 |
| 23 | 2.5 | 0.7 | 2 | 73.8 | 1033 |
| 25 | 2.5 | 1 | 2.5 | 71.5 | 1035 |
| 30 | 3 | 1 | 3 | 66 | 1024 |

Fig. 3

| ESS structure, % vol. | | | | | Density, kg/m³ |
|---|---|---|---|---|---|
| Dis. fuel | Emulsifier | Colloidal solution of hydrophobic nanoparticles | Ilmenit microparticles | Aqueous solution of calcium chloride | |
| 10 | 2 | 0.5 | 2 | 85.5 | 1166 |
| 15 | 2 | 0.5 | 2.5 | 80 | 1160 |
| 20 | 2.5 | 0.7 | 3 | 73.8 | 1152 |
| 23 | 2.5 | 0.7 | 3.5 | 70.3 | 1150 |
| 25 | 2.5 | 1 | 4 | 67.5 | 1144 |
| 30 | 3 | 1 | 5 | 61 | 1142 |

Fig. 4

| ESS structure, % vol. | | | | | Electrical stability, V |
|---|---|---|---|---|---|
| Dis. fuel | Emulsifier | Colloidal solution of hydrophobic nanoparticles | Hydrophilic nanoparticles | Aqueous solution of calcium chloride | |
| 10 | 2 | 0.5 | 1 | 87.5 | 165 |
| 15 | 2 | 0.5 | 1.3 | 82.5 | 170 |
| 20 | 2.5 | 0.7 | 1.7 | 76.8 | 174 |
| 23 | 2.5 | 0.7 | 2 | 73.8 | 172 |
| 25 | 2.5 | 1 | 2.5 | 71.5 | 178 |
| 30 | 3 | 1 | 3 | 66 | 183 |

Fig. 5

| ESS structure, % vol. | | | | | Electrical stability, V |
|---|---|---|---|---|---|
| Dis. fuel | Emulsifier | Colloidal solution of hydrophobic nanoparticles | Microparticles | Aqueous solution of calcium chloride | |
| 10 | 2 | 0.5 | 2 | 85.5 | 162 |
| 15 | 2 | 0.5 | 2.5 | 80 | 165 |
| 20 | 2.5 | 0.7 | 3 | 73.8 | 169 |
| 23 | 2.5 | 0.7 | 3.5 | 70.3 | 168 |
| 25 | 2.5 | 1 | 4 | 67.5 | 172 |
| 30 | 3 | 1 | 5 | 61 | 170 |

Fig. 6

| ESS structure, % vol. | | | | | Electrical stability, V |
|---|---|---|---|---|---|
| Dis. fuel | Emulsifier | Colloidal solution of hydrophobic nanoparticles | Microparticles | Aqueous solution of calcium chloride | |
| 10 | 2 | 0.5 | 2 | 85.5 | 159 |
| 15 | 2 | 0.5 | 2.5 | 80 | 161 |
| 20 | 2.5 | 0.7 | 3 | 73.8 | 167 |
| 23 | 2.5 | 0.7 | 3.5 | 70.3 | 164 |
| 25 | 2.5 | 1 | 4 | 67.5 | 175 |
| 30 | 3 | 1 | 5 | 61 | 176 |

Fig. 7

| ESS structure, % vol. | | | | | Kinematic viscosity, $mm^2/s$ |
|---|---|---|---|---|---|
| Dis. fuel | Emulsifier | Colloidal solution of hydrophobic nanoparticles | Hydrophilic nanoparticles | Aqueous solution of calcium chloride | |
| 10 | 2 | 0.5 | 1 | 87.5 | 11.2 |
| 15 | 2 | 0.5 | 1.3 | 82.5 | 10.5 |
| 20 | 2.5 | 0.7 | 1.7 | 76.8 | 9.4 |
| 23 | 2.5 | 0.7 | 2 | 73.8 | 9.2 |
| 25 | 2.5 | 1 | 2.5 | 71.5 | 8.8 |
| 30 | 3 | 1 | 3 | 66 | 8.1 |

Fig. 8

| ESS structure, % vol. | | | | | Kinematic viscosity, mm$^2$/s |
|---|---|---|---|---|---|
| Dis. fuel | Emulsifier | Colloidal solution of hydrophobic nanoparticles | Microparticles | Aqueous solution of calcium chloride | |
| 10 | 2 | 0.5 | 2 | 85.5 | 12.1 |
| 15 | 2 | 0.5 | 2.5 | 80 | 11.7 |
| 20 | 2.5 | 0.7 | 3 | 73.8 | 10.4 |
| 23 | 2.5 | 0.7 | 3.5 | 70.3 | 10 |
| 25 | 2.5 | 1 | 4 | 67.5 | 9.4 |
| 30 | 3 | 1 | 5 | 61 | 8.6 |

Fig. 9

| ESS structure, % vol. | | | | | Kinematic viscosity, mm$^2$/s |
|---|---|---|---|---|---|
| Dis. fuel | Emulsifier | Colloidal solution of hydrophobic nanoparticles | Microparticles | Aqueous solution of calcium chloride | |
| 10 | 2 | 0.5 | 2 | 85.5 | 12.3 |
| 15 | 2 | 0.5 | 2.5 | 80 | 11.9 |
| 20 | 2.5 | 0.7 | 3 | 73.8 | 10.6 |
| 23 | 2.5 | 0.7 | 3.5 | 70.3 | 10.2 |
| 25 | 2.5 | 1 | 4 | 67.5 | 9.7 |
| 30 | 3 | 1 | 5 | 61 | 8.8 |

Fig. 10

## INTERNATIONAL SEARCH REPORT

| | |
|---|---|
| | International application No. |
| | PCT/RU 2018/050121 |

**A. CLASSIFICATION OF SUBJECT MATTER**
E21B 43/22 (2006.01); C09K 8/42 (2006.01); B82Y 30/00 (2011.01)

According to International Patent Classification (IPC) or to both national classification and IPC

**B. FIELDS SEARCHED**

Minimum documentation searched (classification system followed by classification symbols)
B01F 17/00, B82Y 30/00, C09K 8/00-8/94, E21B 33/00-33/138, 43/00-43/32

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet, Information Retrieval System of FIPS

**C. DOCUMENTS CONSIDERED TO BE RELEVANT**

| Category* | Citation of document, with indication, where appropriate, of the relevant passages | Relevant to claim No. |
|---|---|---|
| D, A | CA 2765192 A1 (M-I LLC et al.) 23.12.2010, paragraphs [0001], [0002], [0008], [0023], [0028], [0031] | 1, 2 |
| A | RU 2631460 C1 (OBSCHESTVO S OGRANICHENNOI OTVETSTVENNOSTJU "VI-ENERDZHI") 22.09.2017 | 1, 2 |
| A | RU 2184836 C2 (OTKRYTOE AKTSIONERNOE OBSCHESTVO "ROSSIISKAYA INNOVATSIONNAYA TOPLIVNO-ENERGETICHESKAYA KOMPANIYA" et al.) 10.07.2002 | 1, 2 |
| A | US 2014/0116695 A1 (HALLIBURTON ENERGY SERVICES INC.) 01.05.2014 | 1, 2 |
| A | US 6068054 A (EXXON PRODUCTION RESEARCH COMPANY) 30.05. 2000 | 1, 2 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 January 2019 (21.01.2019) | 07 February 2019 (07.02.2019) |

| Name and mailing address of the ISA/ RU | Authorized officer |
|---|---|
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2047745 A
- RU 2483092
- WO 2616632 A

- RU 2279462
- RU 2184839
- CA 2765192